# EUROPÄISCHE PATENTANMELDUNG

(11) **EP 2 022 619 A1**
(43) Veröffentlichungstag der Anmeldung: **11.02.2009**
(21) Anmeldenummer: 07015181.6
(22) Anmeldetag: 02.08.2007
(51) Int. Cl.: B29C 65/00, B29C 65/16

(54) **Vorrichtung und Verfahren zum Verschweissen von Bahnen**

(71) Anmelder: ProLas GmbH, 52146 Würselen (DE)
(72) Erfinder: Deschler, Marc, Dr., 52074 Aachen (DE); Hänsch, Dirk, Dr., 4730 Hauset (BE); Ott, Peter, 53424 Remagen (DE)
(74) Vertreter: Paul, Dieter-Alfred

(57) **Zusammenfassung**

Eine Vorrichtung (1) zum Verschweißen von mindestens zwei übereinander liegenden Bahnen (2), die zwei Presselemente (3, 4) aufweist, welche zwischen sich einen Pressspalt (5) bilden, durch den die Bahnen (2) geführt werden. Zusätzlich ist die Vorrichtung (1) mit einem Laser (7) versehen, der so angeordnet ist, dass er Laserstrahlung (8) unter Durchstrahlung des ersten Presselementes (3) und des Pressspalts (5) in Richtung des zweiten Presselementes (4) abgibt. Erfindungsgemäß wird das zweite Presselement (4) von einem elastisch gelagerten blechartigen Abstützelement (9) gebildet, welches die Bahnen (2) im Pressspalt (5) federnd in Richtung des ersten Presselementes (3) beaufschlagt.

## Beschreibung

Die Erfindung betrifft eine Vorrichtung zum Verschweißen von mindestens zwei übereinander liegenden Bahnen mit zwei Presselementen, die zwischen sich einen Pressspalt bilden, durch welchen die Bahnen geführt werden, und mit einem Laser, der so angeordnet ist, dass er Laserstrahlung unter Durchstrahlung des ersten Presselementes und des Pressspalts in Richtung des zweiten Presselementes abgibt. Die Erfindung betrifft weiterhin ein verfahren zum Verschweißen von Bahnen.

Eine derartige Vorrichtung ist beispielsweise aus der WO 00/03865 bekannt. Die hier beschriebene Vorrichtung ist dafür ausgelegt, zwei übereinander liegende Bahnen miteinander zu verschweißen. Die Bahnen sind in einem Pressspalt positioniert, der von zwei Presselementen gebildet wird. Es ist ein Laser vorgesehen, der Laserstrahlung durch das erste Presselement hindurch in Richtung des zweiten Presselements in den Pressspalt abgibt. Ein Teil der Laserstrahlung wird von den Bahnen unter Erwärmung im Pressspalt absorbiert. Der übrige Teil der Laserstrahlung trifft auf eine reflektierende Oberfläche des zweiten Presselementes auf, wo er zumindest teilweise zurück in Richtung des ersten Presselementes reflektiert wird. Auch die reflektierende Laserstrahlung trägt zur Erwärmung der Bahnen im Pressspalt bei. Die im zu verschweißenden Bereich aufgeschmolzenen Bahnen verbinden sich unter dem Druck der Presselemente zu einer Schweißnaht.

Es hat sich herausgestellt, dass die Qualität der hergestellten Schweißnaht wesentlich davon abhängt, wie und in welchem Maße die übereinanderliegenden Bahnen während des Schweißens gegeneinander gepresst werden. So gelingt es mit den im Stand der Technik bekannten Presselement häufig nicht den notwendigen Pressdruck genau im Schweißbereich zum Zeitpunkt des Verschweißens zu erzeugen. In der Folge kann dies dazu führen, dass die Schweißnaht nicht mit der notwendigen Gleichmäßigkeit und Qualität ausgebildet wird. Dieses Problem tritt verstärkt dann auf, wenn die zu verschweißenden Bahnen mit hoher Geschwindigkeit durch den Schweißbereich geführt werden.

Es ist daher Aufgabe der vorliegenden Erfindung eine Vorrichtung der Eingangs genannten Art so weiterzuentwikkeln, dass ein präzises Zusammenpressen der Bahnen im Pressspalt während des Schweißens ermöglicht wird.

Diese Aufgabe wird dadurch gelöst, dass das zweite Presselement von einem elastisch gelagerten blechartigen Abstützelement gebildet wird, welches die Bahnen im Pressspalt federnd in Richtung des ersten Presselementes beaufschlagt.

Grundgedanke der Erfindung ist es also, als zweites Presselement ein blechartiges Abstützelement zu verwenden, dass elastisch gelagert ist und so mit der notwendigen Flexibilität die Bahnen im Pressspalt in Richtung des ersten Presselements drückt. Dabei hat sich herausgestellt, dass das Abstützelement eine sichere und zuverlässige Komprimierung der Bahnen auch bei einer hohen Fahrgeschwindigkeit der Bahnen durch den Pressspalt sicherstellt.

Gemäß einer ersten Ausführungsform der Erfindung ist vorgesehen, das Abstützelement mit seiner dem Pressspalt abgewandten Seite auf einem elastischen Federelement abzustützen. Dabei kann das Federelement ein verformbarer Vollkörper oder auch ein beispielsweise röhrenförmig ausgebildeter Hohlkörper sein. Als Material für den voll- oder Hohlkörper können verformbare Kunststoffe verwendet werden. Bei diesen Ausführungsformen der Erfindung wird eine besonders gute Komprimierung der Bahnen im Pressspalt erzielt. Alternativ kann das elastische Federelement als Druckfeder ausgebildet werden.

Das Abstützelement kann ein Metallblech sein. Alternativ können blechartige Elemente beispielsweise aus Kunststoff oder ähnlichen elastischen Materialien verwendet werden. Dabei kann das Abstützelement zusätzlich mit einer Laserstrahlung reflektierenden Beschichtung, beispielsweise aus Metall, versehen sein. Eine bevorzugte Weiterbildung der Erfindung sieht vor, dass das Metallblech aus Aluminium, Kupfer, Silber, Gold, insbesondere aus Stahl und besonders bevorzugt aus Stahl 18/10 besteht.

Durch die reflektierende Oberfläche wird zumindest ein Teil der auftreffenden Laserstrahlung in Richtung des ersten Presselements reflektiert. Vorteilhafterweise wird daher der Anteil der Laserstrahlung, welcher nicht von den Bahnen im Pressspalt absorbiert wurde, zurück in den Pressspalt reflektiert, wo dann erneut Absorption erfolgt. Damit trägt dieser Strahlungsanteil mit zur Erwärmung der Bahnen bei, was insbesondere die Energieeffizienz erhöht.

Gemäß einer weiteren Ausführungsform besitzt das Abstützelement ein hohes Reflektionsvermögen für Laserstrahlung und eine geringe Wärmeleitfähigkeit. Dabei kann das Reflektionsvermögen insbesondere ≥ 70%, bevorzugt ≥ 80% und besonders bevorzugt ≥ 90% der auftreffenden Strahlung betragen. Die Wärmeleitfähigkeit kann ≤ 400 W/(m*k), bevorzugt ≤ 200 W/(m*k), besonders bevorzugt ≤ 100 W/(m*k) und insbesondere bevorzugt ≤ 20 W/(m*k) betragen. Ein derartiges Abstützelement, das beispielsweise aus Metall, Kunststoff oder auch Kunststoff mit eingelassenen Metallpartikeln bestehen kann, trägt dazu bei, dass die Laserstrahlung noch effizienter zum Verschweißen der Bahnen verwendet wird, da es die auftreffende Laserstrahlung besonders gut reflektiert. Zusätzlich wird die durch Absorption von Laserstrahlung im Abstützelement erzeugte Wärme aufgrund der geringen Wärmeleitfähigkeit nicht im Abstützelement verteilt, sondern zumindest teilweise an die Bahnen im Pressspalt abgegeben. Auf diese Weise trägt auch der nicht reflektierte Anteil der Laserstrahlung zur Erwärmung der Bahnen im Pressspalt bei.

Es ist ebenfalls möglich, dass das Abstützelement eine Dicke von 0,01 bis 0,2 mm, besonders bevorzugt von 0,02 bis 0,1 mm und insbesondere von 0,05 mm aufweist. Ein Abstützelement einer derartigen Dicke weist gute elastische Eigenschaften und eine hohe Verschleißfestigkeit auf.

Die Presselemente können die Bahnen mit einem Druck von 1 bis 8 bar, besonders bevorzugt von 2 bis 6 bar und insbesondere von 3 bar zusammenpressen. Bei einem solchen Pressdruck wird eine sichere und gleichmäßige Verschweißung der Bahnen erzielt.

Die Vorrichtung kann zusätzlich eine Heizvorrichtung für die Bahnen aufweisen, welche die Bahnen vor dem Eintritt in den Pressspalt erwärmt. Eine derartige Heizvorrichtung kann beispielsweise von IR-Strahlern und/oder Widerstandsheizungen und/oder Heißluftgebläsen gebildet werden. Versuche haben hier außerdem gezeigt, dass die vorgewärmten Bahnen, vor allem wenn sie auf eine Temperatur im Bereich von 40 bis 80°C und insbesondere von 60 bis 70°C aufgewärmt werden besonders zuverlässig verschweißt werden können. Diese Ausgestaltung ist sehr vorteilhaft, wenn die Bahnen mit einer hohen Fahrgeschwindigkeit durch den Pressspalt geführt werden.

Gemäß einer weiteren Ausführungsform der Erfindung ist vorgesehen, dass der Laser eine Leistung von ≥ 100 W und ≤ 700 W und insbesondere von ≥ 120 W und ≤ 300 W hat. Der Laser kann ausgebildet sein, eine Laserstrahlung mit einer Wellenlänge ≥ 800 nm und ≤ 1200 nm und insbesondere ≥ 900 nm und ≤ 1100 nm abzugeben. Es kann auch Laserstrahlung im Bereich des nahen und/oder fernen Infrarots verwendet werden.

Das erste Presselement kann als Pressrolle ausgebildet werden. Dies ist insbesondere dann vorteilhaft, wenn die Bahnen durch den Pressspalt hindurch bewegt werden sollen. In diesem Fall wird eine gleichmäßige Komprimierung der Bahnen während des Verschweißens sichergestellt.

Die Pressrolle kann eine elastische für Laserstrahlung transparente Schicht aufweisen, die insbesondere aus Silikon bestehen kann. In diesem Fall sind beide Presselemente elastisch ausgebildet, so dass aufgrund der größeren Flexibilität eine noch bessere Komprimierung der Bahnen in dem Pressspalt erzielt wird.

Es ist weiterhin möglich den Laser innerhalb der Pressrolle anzuordnen.

Bei einer weiteren Ausführungsform der Erfindung ist eine Zuführung für mindestens zwei Bahnen in den Pressspalt und eine Einrichtung zum Aufnehmen der verschweißten Bahnen vorhanden. Mit dieser speziellen Ausgestaltung können Bahnen insbesondere auch kontinuierlich miteinander verschweißt werden.

Die Presselemente und der Laser können angeordnet sein, um die Bahnen in ihrer Längsrichtung oder alternativ in ihrer Querrichtung miteinander zu verschweißen.

In Weiterbildung der Erfindung ist vorgesehen, dass die Vorrichtung beabstandet zum ersten Presselement eine drehbar gelagerte Walze aufweist, deren Achse parallel zu der Querrichtung der Bahnen liegt. Dabei ist wenigstens ein Presselement in einer Vertiefung der Walze so angeordnet, dass die Presselemente den Pressspalt zwischen sich jeweils dann ausbilden, wenn die Presselemente während der Drehung der Walzen einander gegenüber liegen. Mit Hilfe dieser Anordnung können durch den Pressspalt bewegte Bahnen diskontinuierlich verschweißt werden. So wird immer nur dann verschweißt, wenn die Presselemente den Pressspalt ausbilden. Dabei kann insbesondere vorgesehen sein, dass die Betätigung des Lasers über eine Steuerung mit der Drehung der Walze synchronisiert wird.

Es ist ebenfalls möglich, dass das Presselement in der Vertiefung parallel zur Achse der Walz angeordnet ist. Damit können die Bahnen auf einfache Weise diskontinuierlich in ihrer Querrichtung miteinander verschweißt werden.

Die erfindungsgemäße Aufgabe wird auch durch das Verfahren des Anspruchs 25 gelöst, wobei bevorzugte Ausgestaltungen in den Unteransprüchen angegeben sind.

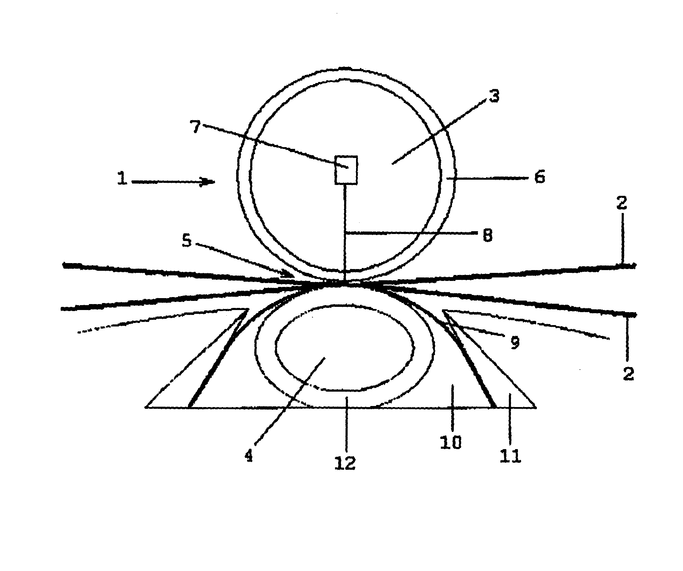

Im folgenden wird die Erfindung anhand eines Ausführungsbeispiels unter Bezugnahme auf die Zeichnung näher erläutert.

In der einzigen Zeichnung ist schematisch eine erfindungsgemäße Vorrichtung 1 zum Verschweißen von zwei übereinander liegenden Bahnen 2 dargestellt. Die Bahnen 2 können aus thermoplastischen Kunststoffen wie PVC, PE und/oder PET bestehen. Sie können eine textile oder folienartige Struktur aufweisen und ihre Formen und Ausmaße sind variabel.

Die Vorrichtung 1 weist ein erstes Presselement 3 und ein zweites Presselement 4 auf, die zwischen sich einen Pressspalt 5 ausbilden. Die Bahnen 2 verlaufen durch den Pressspalt 5 und werden in diesem zusammengepresst.

Das erste Presselement 3 ist als Pressrolle ausgebildet, die hier mit einer elastischen aus Silikon bestehenden für die Laserstrahlung transparenten Schicht 6 versehen ist. Im Inneren des ersten Presselementes 2 ist ein Laser 7 angeordnet, um Laserstrahlung 8 unter Durchstrahlung des ersten Presselementes 3, der elastischen Schicht 6 und des Pressspalts 5 in Richtung des zweiten Presselementes 4 abzugeben.

Das zweite Presselement 4 umfasst als ein elastisch gelagertes Abstützelement ein Metallblech 9, das hier bogenförmig vorgespannt in einer Aussparung 10 einer Halterung 11 angeordnet ist. Dabei ist das Metallblech 9 mit seiner dem Pressspalt 5 abgewandten Seite auf einem elastischen Federelement 12 abgestützt. Das Federelement 12 ist hier röhrenförmig ausgebildet und besteht aus einem verformbaren Kunststoff.

Um die Bahnen 2 in Querrichtung miteinander zu verschweißen, wird von dem Laser 7 die Laserstrahlung 8 erzeugt und in dem Pressspalt 5 abgegeben. Dabei kann ein schmaler Laserstrahl über den zu verschweißenden Bereich der Bahnen geführt werden. Alternativ kann direkt Laserstrahlung 8 von Laser 7 abgegeben werden, die sich über den gesamten zu verschweißenden Bereich der Bahnen 2 erstreckt.

Im Pressspalt 5 werden die Bahnen 2 von den Presselementen 3 und 4 insbesondere in dem Bereich, wo die Laserstrahlung 8 auf sie auftrifft, gegeneinander gepresst. Auf diese Weise wird sichergestellt, das die Bahnen 2, welche unter Erwärmung einen Teil der Laserstrahlung 8 absorbieren, sich beim Verschmelzen gut verbinden und so eine qualitative besonders hochwertige Schweißnaht hergestellt wird.

Der Teil der Laserstrahlung 8, der nicht von den Bahnen 2 absorbiert wird, trifft auf das Metallblech 9 auf, und wird zumindest teilweise an dessen Oberfläche zurück in den Pressspalt 5 reflektiert. Die reflektierte Laserstrahlung kann dann wiederum von den Bahnen 2 absorbiert werden, was zu deren weiterer Erwärmung und damit auch zu einer effizienteren Nutzung der Laserenergie beiträgt. Weiterhin wird der Teil der Laserstrahlung 8, der unter Erwärmung vom Metallblech 9 absorbiert wird, in Form von Wärmeenergie zumindest teilweise an die Bahnen 2 im Pressspalt 5 abgegeben. Folglich trägt auch die vom Metallblech 9 absorbierte Laserstrahlung 8 mittelbar zur Erwärmung der Bahnen 2 bei, was die Energieeffizienz der Vorrichtung 1 erhöht.

Die Bahnen 2 können mit Hilfe einer nicht gezeigten Zuführung in den Pressspalt 5 geleitet werden. Hinter dem Pressspalt 5 ist dann eine Einrichtung zum Aufnehmen der verschweißten Bahnen 2 vorgesehen. In diesem Fall können die übereinander liegenden Bahnen 2 durch den Pressspalt 5 geführt und dabei gegebenenfalls kontinuierlich verschweißt werden, wobei mit der erfindungsgemäßen Vorrichtung 1 eine besonders hohe Schweißgeschwindigkeit erzielt werden kann. Je nach Anordnung der Presselemente 3, 4 und des Lasers 7 können die Bahnen 2 in Längs- und Querrichtung verschweißt werden.

Bei einer alternativen Ausführungsform der Erfindung weist die Vorrichtung 1 eine drehbar gelagerte walze auf, deren Achse parallel zu der Querrichtung der Bahnen 2 liegt. In der Walze ist wenigstens eine Vertiefung ausgebildet, die das untere Presselement 4 aufnimmt. Es können auch mehrere voneinander beabstandete Vertiefungen vorhanden sein, die jeweils ein unteres Presselement 4 enthalten.

Das obere Presselement 3 und das untere Presselement 4 bilden während der Drehung der Walze immer dann den Pressspalt 5 zwischen sich aus, wenn die Presselemente 3, 4 einander gegenüberliegen.

Mit Hilfe dieser Ausführungsform können die Bahnen 2 mit festgelegten Abständen in ihrer Querrichtung verschweißt werden. So wird immer dann verschweißt, wenn die Presselemente 3, 4 den Pressspalt 5 bilden. Zusätzlich kann der Laser 7 über eine Steuerung mit der Drehung der Walze synchronisiert werden.

Wesentlicher Vorteil der erfindungsgemäßen Vorrichtung 1 ist, dass aufgrund der Ausbildung des zweiten Presselementes 4 ein stetiges, präzises Zusammenpressen der Bahnen 2 im Pressspalt 5 während des Schweißens ermöglicht wird. In der Folge wird kontinuierlich ein optimaler Pressdruck erzeugt, so dass die Schweißnaht mit einer hohen Gleichmäßigkeit und Qualität ausgebildet wird.

Versuche haben gezeigt, dass die erfindungsgemäße Vorrichtung insbesondere gut zum Verschweißen von PVC-, PP- und PET-Folien geeignet ist. Hier hat sich insbesondere eine Laserleistung im Bereich ≥ 120 W und ≤ 300 W sowie eine Wellenlänge des Laserlichts von ≥ 800 nm und ≤ 1200 nm als besonders vorteilhaft erwiesen. Eine hohe Schweißgeschwindigkeit bei den genannten Materialien konnte vor allem dann erzielt werden, wenn ein Metallblech 9 aus Stahl 18/10 mit einer Dicke im Bereich von 0,01 bis 0,2 mm verwendet wurde. Als besonders bevorzugter Pressdruck wurde ein Druckbereich von 1 bis 8 bar ermittelt. Außerdem hat es sich hier als vorteilhaft erwiesen, wenn die Folien 2 mit Hilfe einer Heizvorrichtung vor dem Eintritt in den Pressspalt 5 auf eine Temperatur im Bereich von 70 bis 80°C erwärmt werden.

## Patentansprüche

1. Vorrichtung (1) zum Verschweißen von mindestens zwei übereinander liegenden Bahnen (2) mit zwei Presselementen (3, 4), die zwischen sich einen Pressspalt (5) bilden, durch welchen die Bahnen (2) geführt werden, und mit einem Laser (7), der so angeordnet ist, dass er Laserstrahlung (8) unter Durchstrahlung des ersten Presselementes (3) und des Pressspalts (5) in Richtung des zweiten Presselementes (4) abgibt, **dadurch gekennzeichnet, dass** das zweite Presselement (4) von einem elastisch gelagerten blechartigen Abstützelement (9) gebildet wird, welches die Bahnen (2) im Pressspalt (5) federnd in Richtung des ersten Presselementes (3) beaufschlagt.

2. Vorrichtung (1) nach Anspruch 1, **dadurch gekennzeichnet, dass** das Abstützelement (9) mit seiner dem Pressspalt (5) abgewandten Seite auf einem elastischen Federelement (12) abgestützt ist.

3. Vorrichtung (1) nach Anspruch 2, **dadurch gekennzeichnet, dass** das Federelement (12) als verformbarer Voll- oder Hohlkörper ausgebildet ist.

4. Vorrichtung (1) nach Anspruch 3, **dadurch gekennzeichnet, dass** das Federelement (12) röhrenförmig ausgebildet ist.

5. Vorrichtung (1) nach einem der Ansprüche 3 oder 4, **dadurch gekennzeichnet, dass** der Voll- oder Hohlkörper aus einem verformbaren Kunststoff besteht.

6. Vorrichtung (1) nach Anspruch 2, **dadurch gekennzeichnet, dass** das Federelement (12) eine Druckfeder ist.

7. Vorrichtung (1) nach einem der vorhergehenden Ansprüche, **dadurch gekennzeichnet, dass** das Abstützelement (9) ein Metallblech ist.

8. Vorrichtung (1) nach Anspruch 7, **dadurch gekennzeichnet, dass** das Metallblech (9) aus Aluminium, Kupfer, Silber, Gold, insbesondere aus Stahl und besonders bevorzugt aus Stahl 18/10 besteht.

9. Vorrichtung nach einem der vorhergehenden Ansprüche, **dadurch gekennzeichnet, dass** das Abstützelement (9) eine Laserstrahlung reflektierende Oberfläche aufweist, die zumindest einen Teil der auftreffenden Laserstrahlung (8) in Richtung des ersten Presselementes (3) reflektiert.

10. Vorrichtung (1) nach Anspruch 9, **dadurch gekennzeichnet, dass** das Abstützelement (9) ein hohes Reflektionsvermögen für Laserstrahlung, insbesondere von ≥ 70%, bevorzugt von ≥ 80% und besonders bevorzugt von ≥ 90% der auftreffenden Strahlung, und eine geringe Wärmeleitfähigkeit, insbesondere von s 400 W/(m*k), bevorzugt von s 200 W/(m*k), besonders bevorzugt von ≤ 100 W/(m*k) und insbesondere bevorzugt von ≤ 20 W/(m*k) aufweist.

11. Vorrichtung (1) nach einem der vorhergehenden Ansprüche, **dadurch gekennzeichnet, dass** das Abstützelement (9) eine Dicke von 0,01 bis 0,2 mm, besonders bevorzugt von 0,02 bis 0,1 mm und insbesondere von 0,05 mm aufweist.

12. Vorrichtung (1) nach einem der vorhergehenden Ansprüche, **dadurch gekennzeichnet, dass** die Presselemente (3, 4) die Bahnen (2) mit einem Druck von 1 bis 8 bar, besonders bevorzugt von 2 bis 6 bar und insbesondere von 3 bar zusammenpressen.

13. Vorrichtung (1) nach einem der vorhergehenden Ansprüche, **dadurch gekennzeichnet, dass** eine Heizvorrichtung für die Bahnen (2) vorhanden ist, welche die Bahnen (2) vor dem Eintritt in dem Pressspalt (5) erwärmt.

14. Vorrichtung (1) nach einem der vorhergehenden Ansprüche, **dadurch gekennzeichnet, dass** der Laser (7) eine Leistung von ≥ 100 Watt und ≤ 700 Watt und insbesondere von ≥ 120 Watt und ≤ 300 Watt hat.

15. Vorrichtung (1) nach einem der vorhergehenden Ansprüche, **dadurch gekennzeichnet, dass** der Laser (7) ausgebildet ist, Laserstrahlung (8) mit einer Wellenlänge ≥ 800 nm und ≤ 1200 nm und insbesondere ≥ 900 nm und ≤ 1100 nm abzugeben.

16. Vorrichtung (1) nach einem der Ansprüche 1 bis 14, **dadurch gekennzeichnet, dass** der Laser (7) ausgebildet ist Laserstrahlung (8) im Bereich des nahen Infrarots und/oder des fernen Infrarots abzugeben.

17. Vorrichtung (1) nach einem der vorhergehenden Ansprüche, **dadurch gekennzeichnet, dass** das erste Presselement (3) als Pressrolle ausgebildet ist.

18. Vorrichtung (1) nach Anspruch 17, **dadurch gekennzeichnet, dass** die Pressrolle (3) eine elastische für Laserstrahlung (8) transparente Schicht (6) insbesondere aus Silikon aufweist.

19. Vorrichtung (1) nach einem der Ansprüche 17 oder 18, **dadurch gekennzeichnet, dass** der Laser (7) innerhalb der Pressrolle (3) angeordnet ist.

20. Vorrichtung (1) nach einem der vorhergehenden Ansprüche, **dadurch gekennzeichnet, dass** eine Zuführung für mindestens zwei Bahnen (2) in den Pressspalt (5) und eine Einrichtung zum Aufnehmen der verschweißten Bahnen (2) vorhanden sind.

21. Vorrichtung (1) nach einem der vorhergehenden Ansprüche, **dadurch gekennzeichnet, dass** die Presselemente (3, 4) und der Laser (7) angeordnet sind, um die Bahnen (2) in ihrer Längsrichtung miteinander zu verschweißen.

22. Vorrichtung (1) nach einem der Ansprüche 1 bis 20, **dadurch gekennzeichnet, dass** die Presselemente (3, 4) und der Laser (7) angeordnet sind, um die Bahnen (2) in festgelegten Intervallen in ihrer Querrichtung miteinander zu verschweißen.

23. Vorrichtung (1) nach einem der vorhergehenden Ansprüche, **dadurch gekennzeichnet, dass** sie beabstandet zum ersten Presselement (3) eine drehbar gelagerte Walze aufweist, deren Achse parallel zur Querrichtung der Bahnen (2) liegt, wobei wenigstens ein Presselement (4) in einer Vertiefung der Walze so angeordnet ist, dass die Presselemente (3, 4) den Pressspalt (7) zwischen sich jeweils dann ausbilden, wenn die Presselemente (3, 4) während der Drehung der Walze einander gegenüber liegen.

24. Vorrichtung (1) nach Anspruch 23, **dadurch gekennzeichnet, dass** das Presselement (4) in der Vertiefung parallel zur Achse der walze angeordnet ist.

25. Verfahren zum Verschweißen von mindestens zwei übereinanderliegenden Bahnen (2), bei dem die Bahnen (2) durch einen zwischen zwei Presselementen (3, 4) gebildeten Pressspalt (5) geführt werden und von einem Laser (7) eine Laserstrahlung (8) unter Durchstrahlung des ersten Presselementes (3) und des Pressspalts (5) in Richtung des zweiten Presselementes (4) abgegeben wird, **dadurch gekennzeichnet, dass** als zweites Presselement (4) ein elastisch gelagertes blechartiges Abstützelement (9) verwendet wird, welches die Bahnen (2) im Pressspalt (5) federnd in Richtung des ersten Presselementes (3) beaufschlagt.

26. Verfahren nach Anspruch 25, **dadurch gekennzeichnet, dass** ein Teil der Laserstrahlung (8) von dem Abstützelement (9) absorbiert und in Form von Wärme an die Bahnen (2) im Pressspalt (5) abgegeben wird.

27. Verfahren nach einem der Ansprüche 25 oder 26, **dadurch gekennzeichnet, dass** als Abstützelement (9) ein Metallblech verwendet wird.

28. Verfahren nach einem der Ansprüche 25 bis 27, **dadurch gekennzeichnet, dass** zumindest ein Teil der auf eine Laserstrahlung reflektierenden Oberfläche des Abstützelementes (9) auftreffenden Laserstrahlung (8) in Richtung des ersten Presselementes (3) reflektiert wird.

29. Verfahren nach einem der Ansprüche 25 bis 28, **dadurch gekennzeichnet, dass** die Bahnen (2) mit einem Druck von 1 bis 8 bar, besonders bevorzugt von 2 bis 6 bar und insbesondere von 3 bar zusammengepresst werden.

30. Verfahren nach einem der Ansprüche 25 bis 29, **dadurch gekennzeichnet, dass** die Bahnen (2) vor dem Eintritt in den Pressspalt (5) erwärmt werden.

31. Verfahren nach einem der Ansprüche 25 bis 30, **dadurch gekennzeichnet, dass** ein Laser (7) mit einer Leistung ≥ 100 Watt und ≤ 700 Watt und insbesondere von ≥ 120 Watt und ≤ 300 Watt verwendet wird.

32. Verfahren nach einem der Ansprüche 25 bis 31, **dadurch gekennzeichnet, dass** Laserstrahlung (8) mit einer Wellenlänge ≥ 800 nm und ≤ 1200 nm und insbesondere ≥ 900 nm und ≤ 1100 nm verwendet wird.

33. Verfahren nach einem der Ansprüche 25 bis 31, **dadurch gekennzeichnet, dass** Laserstrahlung (8) im Bereich des nahen und/oder fernen Infrarots verwendet wird.

34. Verfahren nach einem der Ansprüche 25 bis 33, **dadurch gekennzeichnet, dass** die Bahnen (2) in ihrer Längsrichtung miteinander verschweißt werden.

35. Verfahren nach einem der Ansprüche 25 bis 33, **dadurch gekennzeichnet, dass** die Bahnen (2) in ihrer Querrichtung miteinander verschweißt werden.

36. Verfahren nach einem der Ansprüche 25 bis 35, **dadurch gekennzeichnet, dass** Kunststofffolienbahnen (2) insbesondere aus PVC, PP und/oder PET verschweißt werden.

37. Verfahren nach einem der Ansprüche 25 bis 36, **dadurch gekennzeichnet, dass** Kunststofftextilbahnen (2) verschweißt werden.

## Geänderte Patentansprüche

### Geänderte Patentansprüche gemäss Regel 137(2) EPÜ.

**1.** Vorrichtung (1) zum Verschweißen von mindestens zwei übereinander liegenden Bahnen (2) mit zwei Presselementen (3, 4), die zwischen sich einen Pressspalt (5) bilden, durch welchen die Bahnen (2) geführt sind, und mit einem Laser (7), der so angeordnet ist, dass er Laserstrahlung (8) unter Durchstrahlung des ersten Presselementes (3) und des Pressspalts (5) in Richtung des zweiten Presselementes (4) abgibt, **dadurch gekennzeichnet, dass** das zweite Presselement (4) von einem elastisch gelagerten blechartigen Abstützelement (9) gebildet wird, das ausgebildet ist die Bahnen (2) im Pressspalt (5) federnd in Richtung des ersten Presselementes (3) zu beaufschlagen.

**2.** Vorrichtung (1) nach Anspruch 1, **dadurch gekennzeichnet, dass** das Abstützelement (9) mit seiner dem Pressspalt (5) abgewandten Seite auf einem elastischen Federelement (12) abgestützt ist.

**3.** Vorrichtung (1) nach Anspruch 2, **dadurch gekennzeichnet, dass** das Federelement (12) als verformbarer Voll- oder Hohlkörper ausgebildet ist.

**4.** Vorrichtung (1) nach Anspruch 3, **dadurch gekennzeichnet, dass** das Federelement (12) röhrenförmig ausgebildet ist.

**5.** Vorrichtung (1) nach einem der Ansprüche 3 oder 4, **dadurch gekennzeichnet, dass** der Voll- oder Hohlkörper aus einem verformbaren Kunststoff besteht.

**6.** Vorrichtung (1) nach Anspruch 2, **dadurch gekennzeichnet, dass** das Federelement (12) eine Druckfeder ist.

**7.** Vorrichtung (1) nach einem der vorhergehenden Ansprüche, **dadurch gekennzeichnet, dass** das Abstützelement (9) ein Metallblech ist.

**8.** Vorrichtung (1) nach Anspruch 7, **dadurch gekennzeichnet, dass** das Metallblech (9) aus Aluminium, Kupfer, Silber, Gold, insbesondere aus Stahl und besonders bevorzugt aus Stahl 18/10 besteht.

**9.** Vorrichtung nach einem der vorhergehenden Ansprüche, **dadurch gekennzeichnet, dass** das Abstützelement (9) eine Laserstrahlung reflektierende Oberfläche aufweist, die zumindest einen Teil der auftreffenden Laserstrahlung (8) in Richtung des ersten Presselementes (3) reflektiert.

**10.** Vorrichtung (1) nach Anspruch 9, **dadurch gekennzeichnet, dass** das Abstützelement (9) ein hohes Reflektionsvermögen für Laserstrahlung, insbesondere von ≥ 70%, bevorzugt von ≥ 80% und besonders bevorzugt von ≥ 90% der auftreffenden Strahlung, und eine geringe Wärmeleitfähigkeit, insbesondere von ≤ 400 w/(m*k), bevorzugt von ≤ 200 w/(m*k), besonders bevorzugt von ≤ 100 W/(m*k) und insbesondere bevorzugt von ≤ 20 W/(m*k) aufweist.

**11.** Vorrichtung (1) nach einem der vorhergehenden Ansprüche, **dadurch gekennzeichnet, dass** das Abstützelement (9) eine Dicke von 0,01 bis 0,2 mm, besonders bevorzugt von 0,02 bis 0,1 mm und insbesondere von 0,05 mm aufweist.

**12.** Vorrichtung (1) nach einem der vorhergehenden Ansprüche, **dadurch gekennzeichnet, dass** die Presselemente (3, 4) ausgebildet sind die Bahnen (2) mit einem Druck von 1 bis 8 bar, besonders bevorzugt von 2 bis 6 bar und insbesondere von 3 bar zusammen zu pressen.

**13.** Vorrichtung (1) nach einem der vorhergehenden Ansprüche, **dadurch gekennzeichnet, dass** eine Heizvorrichtung für die Bahnen (2) vorhanden ist, die ausgebildet sind die Bahnen (2) vor dem Eintritt in dem Pressspalts (5) zu erwärmen.

**14.** Vorrichtung (1) nach einem der vorhergehenden Ansprüche, **dadurch gekennzeichnet, dass** der Laser (7) eine Leistung von ≥ 100 Watt und ≤ 700 watt und insbesondere von ≤ 120 watt und ≤ 300 Watt hat.

**15.** Vorrichtung (1) nach einem der vorhergehenden Ansprüche, **dadurch gekennzeichnet, dass** der Laser (7) ausgebildet ist, Laserstrahlung (8) mit einer Wellenlänge ≥ 800 nm und ≤ 1200 nm und insbesondere ≥ 900 nm und ≤ 1100 nm abzugeben.

**16.** Vorrichtung (1) nach einem der Ansprüche 1 bis 14, **dadurch gekennzeichnet, dass** der Laser (7) ausgebildet ist Laserstrahlung (8) im Bereich des nahen Infrarots und/oder des fernen Infrarots abzugeben.

**17.** Vorrichtung (1) nach einem der vorhergehenden Ansprüche, **dadurch gekennzeichnet, dass** das erste Presselement (3) als Pressrolle ausgebildet ist.

**18.** Vorrichtung (1) nach Anspruch 17, **dadurch gekennzeichnet, dass** die Pressrolle (3) eine elastische für Laserstrahlung (8) transparente Schicht (6) insbesondere aus Silikon aufweist.

**19.** Vorrichtung (1) nach einem der Ansprüche 17 oder 18, **dadurch gekennzeichnet, dass** der Laser (7) innerhalb der Pressrolle (3) angeordnet ist.

**20.** Vorrichtung (1) nach einem der vorhergehenden Ansprüche, **dadurch gekennzeichnet, dass** eine Zuführung für mindestens zwei Bahnen (2) in den Pressspalt (5) und eine Einrichtung zum Aufnehmen der verschweißten Bahnen (2) vorhanden sind.

**21.** Vorrichtung (1) nach einem der vorhergehenden Ansprüche, **dadurch gekennzeichnet, dass** die Presselemente (3, 4) und der Laser (7) angeordnet sind, um die Bahnen (2) in ihrer Längsrichtung miteinander zu verschweißen.

**22.** Vorrichtung (1) nach einem der Ansprüche 1 bis 20, **dadurch gekennzeichnet, dass** die Presselemente (3, 4) und der Laser (7) angeordnet sind, um die Bahnen (2) in festgelegten Intervallen in ihrer Querrichtung miteinander zu verschweißen.

**23.** Vorrichtung (1) nach einem der vorhergehenden Ansprüche, **dadurch gekennzeichnet, dass** sie beabstandet zum ersten Presselement (3) eine drehbar gelagerte Walze aufweist, deren Achse parallel zur Querrichtung der Bahnen (2) liegt, wobei wenigstens ein Presselement (4) in einer Vertiefung der Walze so angeordnet ist, dass die Presselemente (3, 4) den Pressspalt (7) zwischen sich jeweils dann ausbilden, wenn die Presselemente (3, 4) während der Drehung der Walze einander gegenüber liegen.

**24.** Vorrichtung (1) nach Anspruch 23, **dadurch gekennzeichnet, dass** das Presselement (4) in der Vertiefung parallel zur Achse der walze angeordnet ist.

**25.** Verfahren zum verschweißen von mindestens zwei übereinanderliegenden Bahnen (2), bei dem die Bahnen (2) durch einen zwischen zwei Presselementen (3, 4) gebildeten Pressspalt (5) geführt werden und von einem Laser (7) eine Laserstrahlung (8) unter Durchstrahlung des ersten Presselementes (3) und des Pressspalts (5) in Richtung des zweiten Presselementes (4) abgegeben wird, **dadurch gekennzeichnet, dass** als zweites Presselement (4) ein elastisch gelagertes blechartiges Abstützelement (9) verwendet wird, welches die Bahnen (2) im Pressspalt (5) federnd in Richtung des ersten Presselementes (3) beaufschlagt.

**26.** Verfahren nach Anspruch 25, **dadurch gekennzeichnet, dass** ein Teil der Laserstrahlung (8) von dem Abstützelement (9) absorbiert und in Form von Wärme an die Bahnen (2) im Pressspalt (5) abgegeben wird.

**27.** Verfahren nach einem der Ansprüche 25 oder 26, **dadurch gekennzeichnet, dass** als Abstützelement (9) ein Metallblech verwendet wird.

**28.** Verfahren nach einem der Ansprüche 25 bis 27, **dadurch gekennzeichnet, dass** zumindest ein Teil der auf eine Laserstrahlung reflektierenden Oberfläche des Abstützelementes (9) auftreffenden Laserstrahlung (8) in Richtung des ersten Presselementes (3) reflektiert wird.

**29.** Verfahren nach einem der Ansprüche 25 bis 28, **dadurch gekennzeichnet, dass** die Bahnen (2) mit einem Druck von 1 bis 8 bar, besonders bevorzugt von 2 bis 6 bar und insbesondere von 3 bar zusammengepresst werden.

**30.** verfahren nach einem der Ansprüche 25 bis 29, **dadurch gekennzeichnet, dass** die Bahnen (2) vor dem Eintritt in den Pressspalt (5) erwärmt werden.

**31.** Verfahren nach einem der Ansprüche 25 bis 30, **dadurch gekennzeichnet, dass** ein Laser (7) mit einer Leistung ≥ 100 watt und ≤ 700 watt und insbesondere von ≥ 120 watt und ≤ 300 watt verwendet wird.

**32.** Verfahren nach einem der Ansprüche 25 bis 31, **dadurch gekennzeichnet, dass** Laserstrahlung (8) mit einer wellenlänge ≥ 800 nm und ≤ 1200 nm und insbesondere ≥ 900 nm und s 1100 nm verwendet wird.

**33.** verfahren nach einem der Ansprüche 25 bis 31, **dadurch gekennzeichnet, dass** Laserstrahlung (8) im Bereich des nahen und/oder fernen Infrarots verwendet wird.

**34.** Verfahren nach einem der Ansprüche 25 bis 33, **dadurch gekennzeichnet, dass** die Bahnen (2) in ihrer Längsrichtung miteinander verschweißt werden.

**35.** Verfahren nach einem der Ansprüche 25 bis 33, **dadurch gekennzeichnet, dass** die Bahnen (2) in ihrer Querrichtung miteinander verschweißt werden.

**36.** Verfahren nach einem der Ansprüche 25 bis 35, **dadurch gekennzeichnet, dass** Kunststofffolienbahnen (2) insbesondere aus PVC, PP und/oder PET verschweißt werden.

**37.** Verfahren nach einem der Ansprüche 25 bis 36, **dadurch gekennzeichnet, dass** Kunststofftextilbahnen (2) verschweißt werden.
